# EUROPÄISCHE PATENTANMELDUNG

(11) **EP 3 179 834 A1**
(43) Veröffentlichungstag der Anmeldung: **14.06.2017**
(21) Anmeldenummer: 17152070.3
(22) Anmeldetag: 19.02.2013
(51) Int. Cl.: H05B 37/02

(54) **INTELLIGENTE BELEUCHTUNGSEINRICHTUNG MIT MEHREREN LEUCHTEN, INSBESONDERE STEHLEUCHTEN ODER TISCHAUFBAULEUCHTEN, UND VERFAHREN ZUM BETREIBEN EINER SOLCHEN BELEUCHTUNGSEINRICHTUNG**

(30) Priorität: 22.03.2012 DE 102012204579
(62) Teilanmeldung aus: 13155777.9
(71) Anmelder: Herbert Waldmann GmbH & Co. KG, 78056 Villingen-Schwenningen (DE)
(72) Erfinder: Stockburger, Marc, 78628 Rottweil (DE); Hahn, Klaus-Jürgen, 78050 Villingen-Schwenningen (DE)
(74) Vertreter: Westphal, Mussgnug & Partner Patentanwälte mbB

(57) **Zusammenfassung**

Die Erfindung betrifft eine intelligente Beleuchtungseinrichtung mit mehreren Leuchten (L1...L24), die mit einer drahtlosen Kommunikationseinrichtung zumindest teilweise untereinander gekoppelt sind. Hierfür weisen die Leuchten vorzugsweise Kommunikationsmodule (KM) mit Sende-/Empfangseinrichtungen auf, über welche die Leuchten (L1...L24) zumindest teilweise untereinander kommunizieren können. Dabei ist vorgesehen, dass nach Maßgabe des aktuellen Betriebsmodus einer der Leuchten (L3) mindestens eine der anderen Leuchten (L1, L2, L4, L5, L6) einen vordefinierten Betriebsmodus einnehmen kann. Diese kann bspw. beim Einschalten einer Leuchte (L1...L24) oder, wenn eine der Leuchten (L1...L24) eine Person mittels einer Sensorvorrichtung (SE) im Bereich der Leuchte (L1...L24) erfasst, in ein Arbeitsniveau mit einer vorgegebenen Beleuchtungsstärke gehen und die in der Nähe dieser einen Leuchte (L3) befindlichen anderen Leuchten (L1, L2, L4, L5, L6) in eine Grundbeleuchtung, d. h. in eine Beleuchtung mit einem niedrigeren Leuchtniveau (Grundniveau).

Vorteile:

Vermeidung von einzelnen Lichtinseln bei Nutzung von arbeitsplatzorientierter Beleuchtung, d. h. einzeln eingeschalteten Leuchten; einfache Installation; hohe Variabilität.

## Beschreibung

Die Erfindung betrifft eine intelligente Beleuchtungseinrichtung mit mehreren Leuchten, insbesondere Stehleuchten oder Tischaufbauleuchten, welche zumindest teilweise untereinander über eine Kommunikationseinrichtung gekoppelt sind.

Solche intelligenten Beleuchtungseinrichtungen sind bereits bekannt. So beschreibt bspw. die DE 10 2006 057 755 A1 eine steuerbare Beleuchtungsanlage, die zeitabhängig in Abhängigkeit vom Tageslicht oder nach Maßgabe einer Bewegung der im Bereich der Beleuchtungsanlage befindlichen Personen oder Tiere gesteuert wird. Zusätzlich wird eine Steuerung der Beleuchtungsanlage beschrieben, bei der in Abhängigkeit von der Position der Person einzelne Leuchten oder Leuchtengruppen zurückgedimmt oder abgeschaltet werden, wenn sich kein Benutzer im Raum befindet. Bei Meldung von Anwesenheit oder fehlender Meldung einer Anwesenheit von Personen oder Tieren werden entsprechende Steuerbefehle für die gesamte Beleuchtungsanlage generiert. Wie dies im Einzelnen geschehen soll, offenbart die DE 10 2006 057 755 A1 nicht.

Ein anderes intelligentes Leuchtensystem beschreibt die EP 20 48 916 B1. Dort sind eine Vielzahl von Leuchten über ein drahtgebundenes Leuchtennetzwerk mit Bedien- und/oder Sensorelementen verbunden. Wesentlich bei diesem Leuchtennetzwerk ist, dass jede der Leuchten über eine ein- oder mehradrige Informationssignalleitung verfügt, die in die Stromversorgungsschienen eingefügt und damit Bestandteil der gemeinsamen Stromversorgungseinrichtung ist. Dadurch ist es möglich, dass jede der Leuchten Informationen an die übrigen Leuchten versenden kann. Hierdurch kann jede Leuchte, wenn ein ihr direkt zugeordnetes Bedien- und/oder Sensorelement ein Stellsignal auslöst, diese Stellsignal nicht nur bei sich selbst zur Ansteuerung des Leuchtmittels umsetzen, sondern auch an die anderen Leuchten des Netzwerkes über den drahtgebundenen Informationsübermittlungskanal weitergeben. Die Informationssignalleitung ist insbesondere als Ein- oder Mehrdrahtbus ausgebildet.

Problematisch bei solchen drahtgebundenen, intelligenten Beleuchtungseinrichtungen ist die Tatsache, dass ein verhältnismäßig hoher Installationsaufwand erforderlich ist, der umso größer wird, je mehr Leuchten in die gesamte Beleuchtungsanlage integriert werden sollen. Zudem ist eine Veränderung der Beleuchtungsanlage, d.h. ein Umstellen der einzelnen Leuchten z. B. in Großraumbüros schwierig. Zudem muss ein besonderer drahtgebundener Kommunikationskanal vorgehalten werden, um eine solche intelligente Beleuchtungsanlage überhaupt zu ermöglichen.

Das Ziel der vorliegenden Erfindung besteht darin, eine intelligente Beleuchtungseinrichtung anzugeben, die leicht zu installieren ist und sich durch eine hohe Flexibilität auszeichnet. Des weiteren soll die intelligente Beleuchtungseinrichtung eine angenehmere Arbeitsatmosphäre schaffen, indem sogenannte Lichtinseln, bei der nur einzelne Leuchten in Großraumbüros Licht abstrahlen, vermieden werden. Die aufzufindende intelligente Beleuchtungseinrichtung soll sich durch ein hohes Maß an Bedienungskomfort sowohl bei der Installation als auch im Betrieb auszeichnen.

Dieses Ziel wird durch eine intelligente Beleuchtungseinrichtung mit den Merkmalen des Anspruchs 1 erreicht. Weiterbildungen der Erfindung sind Gegenstand der auf den Anspruch 1 zurückbezogenen Unteransprüche.

Ein Verfahren zum Betreiben einer intelligenten Beleuchtungseinrichtung ist Gegenstand des Anspruchs 20.

Die intelligente Beleuchtungseinrichtung weist demnach eine drahtlose Kommunikationseinrichtung auf, über welche die Leuchten zumindest teilweise untereinander kommunizieren, wobei nach Maßgabe des aktuellen Betriebsmodus einer der Leuchten mindestens eine der anderen Leuchten einen vordefinierten, anderen Betriebsmodus einnimmt. Von Vorteil ist dabei insbesondere die drahtlose Kommunikationseinrichtung, die bevorzugter Weise jeweils über eine Sender-/Empfängereinrichtung an jede der Leuchten verfügt, damit jede der Leuchten den anderen Leuchten oder einem Teil dieser anderen Leuchten den eigenen Betriebsumstand mitteilen kann bzw. dieser Betriebszustand von den anderen Leuchten detektierbar ist. Das Vorhalten von drahtgebundenen und damit wenig flexiblen Kommunikationskanälen zwischen den Leuchten ist damit nicht mehr notwendig, was die Installation der Leuchten bzw. das Aufstellen der Leuchten in Großraumbüros deutlich erleichtert. Die einzelnen Leuchten müssen lediglich noch an geeignete Steckdosen zur Stromversorgung angeschlossen werden, sofern diese Leuchten nicht mit einer eigenen Stromversorgung, z. B. einer Batterie oder einem Akku, ausgestattet sind.

Die bevorzugten Betriebsmodi der Leuchten sind u.a. folgende:
- Leuchte ist aus ("aus"),
- Leuchte ist mit einer Grundbeleuchtung an ("Grundniveau"), und
- Leuchte ist mit maximal vorgegebener Beleuchtungsstärke an ("Arbeitsniveau").

Dabei sind das Grundniveau und/oder das Arbeitsniveau durch eine Bedienperson einstellbar gewählt.

Als Arbeitsniveau ist dabei derjenige Betriebszustand einer Leuchte bezeichnet, bei dem die Leuchte eine solche Lichtmenge abstrahlt, die ein angenehmes Arbeiten unterhalb bzw. im Bereich dieser Leuchte gestattet. Unter Grundbeleuchtung ist ein hiervon abgesenktes Leuchtniveau zu verstehen, bei dem die Leuchte eine ebenfalls vorher einstellbare geringere Lichtmenge abstrahlt, also im unmittelbaren Bereich dieser Leuchte kein Arbeiten stattfinden muss. Das Grundniveau kann z. B. auf die halbe Lichtmenge des Arbeitsniveaus eingestellt sein. Im Betriebszustand "aus" ist die Leuchte zwar mit der Stromversorgung verbunden, jedoch ausgeschaltet, so dass diese Leuchte kein Licht abstrahlt.

Mit diesen unterschiedlichen Betriebsmodi ist es möglich, dass beim manuellem Einschalten einer Leuchte diese Licht im Arbeitsniveau abstrahlt und die in unmittelbarer Nähe befindlichen anderen Leuchten in den Betriebsmodus "Grundniveau" gehen, so dass um die im Arbeitsniveau betriebene Leuchte herum ein abgesenktes Lichtniveau herrscht und damit eine spotartige Lichtinsel, die durch das alleinige Lichtabstrahlen einer einzigen Leuchte entstehen würde, vermieden wird.

Es ist nicht zwingend, die Kommunikation zwischen den einzelnen Leuchten so zu gestallten, dass die ins Arbeitsniveau gehende Leuchte der anderen in der Umgebung befindlichen Leuchten mitteilt, dass sie in das Arbeitsniveau eingeschaltet wurde. Es liegt vielmehr auch im Rahmen der Erfindung, dass die Leuchten jeweils die in der Umgebung befindlichen anderen Leuchten "beobachten" und dann in einen vorbestimmten Betriebsmodus gehen, wenn eine "beobachtete" Leuchte einen bestimmten Betriebsmodus eingenommen hat. Geht beispielsweise eine der Leuchten in ihr Arbeitsniveau, weil diese z. B. von einer Bedienperson manuell eingeschaltet wurde, detektieren diesen Zustand die anderen in der Umgebung befindlichen Leuchten und schalten in ihr "Grundniveau" ein, sofern sie nicht selbst bereits im Arbeitsniveau sind.

Anstelle des manuellen Einschaltens einer Leuchte kann auch vorgesehen werden, dass die Leuchten zumindest teilweise jeweils über eine Sensorvorrichtung verfügen, wobei sich bei der Detektion einer Person im Sensorbereich der jeweiligen Leuchte diese Leuchte auf ihr Arbeitsniveau einschaltet. Dies wird im Folgenden als "Präsenzerkennung" bezeichnet. Eine solche Sensorvorrichtung kann dabei per Ultraschall, per Infrarotdetektion (z. B. mittels Passiv-Infrarot-Sensoren), mit Radar oder ähnlichem arbeiten.

Es hat sich als vorteilhaft erwiesen, jeder der Leuchten einen vorgegebenen Bereich mit einer Bereichsadresse zuzuordnen. Ein solcher vorgegebener Bereich mit Bereichsadresse kann beispielsweise einem bestimmten Stockwerk und/oder einem unterschiedlichen Raum innerhalb eines Gebäudes zugeordnet sein.

Des Weiteren ist es zweckmäßig, dass jede der Leuchten einer, vorzugsweise zwei oder mehr Gruppen zugeordnet ist, wobei jede Gruppe eine eigene Gruppenadresse aufweist. Eine Gruppe kann beispielsweise so definiert sein, dass zu einer Gruppe immer eine bestimmte Leuchte gehört sowie die in unmittelbarer Nähe dieser Leuchte befindlichen anderen Leuchten. Es liegt dabei im Rahmen der Erfindung, dass sich solche vordefinierten Gruppen überschneiden können.

Es hat sich darüber hinaus als vorteilhaft bewiesen, dass mechanische Schalteinrichtungen, insbesondere Drehschalter, vorgesehen werden, mit denen die Bereichsadressen und/oder Gruppenadressen an jeder der Leuchte manuell von einer Bedienperson einstellbar sind. Dabei ist es besonders einfach, diese mechanischen Schalter mit zugehörender Elektronik in dem Sender- /Empfängermodul der Kommunikationseinrichtung in jeder Leuchte zu platzieren, vorzugsweise nachrüstbar bzw. austauschbar, damit bei einem Defekt eines solchen Kommunikationsmoduls nur dieses an der jeweiligen Leuchte ausgetauscht werden muss.

Es hat sich als günstig erwiesen, wenn die Kommunikationseinrichtung mit den in den einzelnen Leuchten befindlichen Sender- /Empfängermodulen so kommuniziert, dass jede der Leuchten die anderen Leuchten beobachtet. Geht eine der Leuchten durch ein manuelles Einschalten oder durch Präsenzerkennung in ihr Arbeitsniveau, detektieren dies die in unmittelbarer Nachbarschaft befindlichen anderen Leuchten und gehen in ihr Grundniveau, sofern sie nicht selbst bereits in das Arbeitsniveau geschaltet haben. Dieses "Beobachten" der anderen Leuchten hat den Vorteil, dass die Leuchten untereinander unabhängig agieren können, sodass eine redundante Kommunikation vermieden wird.

In einer Weiterbildung der Erfindung ist vorgesehen, dass der Zustand einer Leuchte, die sich im Arbeitszustand befindet, intervallmäßig den anderen Leuchten mitteilbar ist oder in einer alternativen Ausführungsform von den zur gleichen Gruppe gehörenden anderen Leuchte intervallmäßig abgefragt wird, vorzugsweise in 10 - bis 20 Sekunden-Intervallen. Diese intervallmäßige Kommunikation hat den Vorteil, dass verhältnismäßig wenig Energie verbraucht wird und trotzdem der aktuelle Arbeitszustand der Leuchten den anderen Leuchten verhältnismäßig schnell zur Verfügung steht. Zusätzlich ist hierdurch eine autarke automatische Abschaltung bei Kommunikationsverlust möglich.

In einer Weiterbildung der Erfindung ist eine Nachlaufzeit von mehreren Minuten vorgesehen, insbesondere 5 bis 30 Minuten, vorzugsweise etwa 10 Minuten. Erfolgt innerhalb dieser Nachlaufzeit keine Präsenzerkennung durch die Leuchte, wird also keine Person im Arbeitsbereich der Leuchte detektiert, führt dies erst nach Ablauf dieser Nachlaufzeit bei den anderen Leuchten in der gleichen Gruppe und im gleichen Bereich zum Abschalten des Betriebsmodus "Grundniveau" in den Betriebszustand "aus", sofern nicht durch andere Ereignisse die jeweilige Leuchte im Grundniveau bleiben oder sogar auf Arbeitsniveau umschalten muss. Dies wird dadurch erreicht, dass die im Arbeitsniveau befindliche Leuchte während ihres Betriebsmodus "Arbeitsniveau" und während der Nachlaufzeit, in der sie sich ebenfalls noch auf Arbeitsniveau befindet, den anderen Leuchten mit der gleichen Bereichs- und Gruppenadresse intervallmäßig mitteilt, dass sie noch im Arbeitsniveau leuchtet. Die Leuchten, die sich in einem anderen Betriebsmodus als "Arbeitsniveau" befinden, versenden keine solchen Präsenzmitteilungen.

Es liegt im Rahmen der Erfindung, dass eine manuell zu betätigende Schalteinrichtung vorgesehen ist, über welche jede Leuchte einzeln einschaltbar und/oder auf ihr Arbeitsniveau und/oder auf ihr Grundniveau dimmbar ist. Eine solche manuell zu betätigende Schalteinrichtung kann prinzipiell an jeder der Leuchten fest montiert sein. Es liegt jedoch auch im Rahmen der Erfindung, eine solche manuelle zu betätigende Schalteinrichtung entfernt von der jeweiligen Leuchte zu platzieren und eine entsprechende, vorzugsweise drahtlose Kommunikation mit der jeweiligen Leuchte vorzusehen. Mit einer solchen manuell zu betätigenden Schalteinrichtung, die vorzugsweise zwei Taster aufweist, kann einerseits das Ein- und Ausschalten der Leuchte aber auch der entsprechenden Dimmvorgang realisiert werden.

Mit einer solchen oder anderen manuell zu betätigenden Schalteinrichtung kann gemäß der vorliegenden Erfindung auch ein Teil der Leuchten eines Bereichs oder alle Leuchten einer oder mehrerer Gruppen bzw. sämtliche Leuchten der intelligenten Beleuchtungseinrichtung ausgeschaltet oder auf eine maximal mögliche Beleuchtungsstärke, die über dem Arbeitsniveau liegt, eingeschaltet werden. Ein solches Einschalten sämtlicher Leuchten ist beispielsweise notwendig, wenn in einem Großraumbüro eine Putzkolonne reinigt.

Die maximal mögliche Beleuchtung wird im Folgenden als "Putzniveau" bezeichnet.

Anzumerken ist dabei, dass jede Leuchte individuell mit einer oder mehreren externen Schaltvorrichtungen verknüpft sein kann. Dies ist nicht gruppen- oder bereichsabhängig. Mit einem Schalter wiederum können beliebig viele Leuchten geschaltet werden.

Wie erwähnt, bedeutet Putzniveau 100% der möglichen Beleuchtungsstärke der Leuchte. Diese geht automatisch nach einer vorgegebenen Zeit, z. B. nach 60 Minuten, wieder in den Betriebsmodus "Aus", wenn dies nicht zuvor durch andere benutzerdefinierte Eingriffe (z. B. über eine Schaltvorrichtung) geschieht.

Das Putzniveau in der Leuchte oder in den Leuchten kann nur über externe Schaltvorrichtungen aktiviert werden.

Die intelligente Beleuchtungseinrichtung gemäß vorliegender Erfindung ist insbesondere für Stehleuchten oder Tischaufbauleuchten bestimmt, jedoch auch für jede andere Art von Leuchten geeignet.

Die vorliegende Erfindung wird nachfolgend anhand eines Ausführungsbeispieles im Zusammenhang mit mehreren Figuren näher erläutert. Es zeigen:
- Fig.1: ein Ausführungsbeispiel einer Stehleuchte nach der Erfindung mit manuellen Schalteinrichtungen zum Aktivieren dieser Stehleuchte,
- Fig. 2: eine Gruppe von drei Stehleuchten gemäß Figur 1,
- Fig. 3: die schematische Ansicht eines Gebäudes mit unterschiedlichen Stockwerken und dort platzierten Stehleuchten mit Kommunikationsmodulen zur Bereichszuordnung,
- Fig. 4: eine ähnliche Darstellung wie Figur 3, bei welchen in einem Stockwerk eine Gruppenzuordnung der Leuchten erfolgt,
- Fig. 5: die drei Stehleuchten von Figur 2 mit zusätzlich vorgesehenen Wand- bzw. Hängeleuchten,
- Fig. 6: bis Fig. 24 die schematische Darstellung eines Großraumbüros mit einer Vielzahl von Arbeitsplätzen, denen jeweils paarweise Arbeitsleuchten zugeordnet sind jeweils in unterschiedlichen Betriebszuständen der gesamten Beleuchtungseinrichtung.

In den nachfolgenden Figuren bezeichnen, sofern nichts anderes angegeben ist, gleiche Bezugszeichen gleiche Teile mit gleicher Bedeutung.

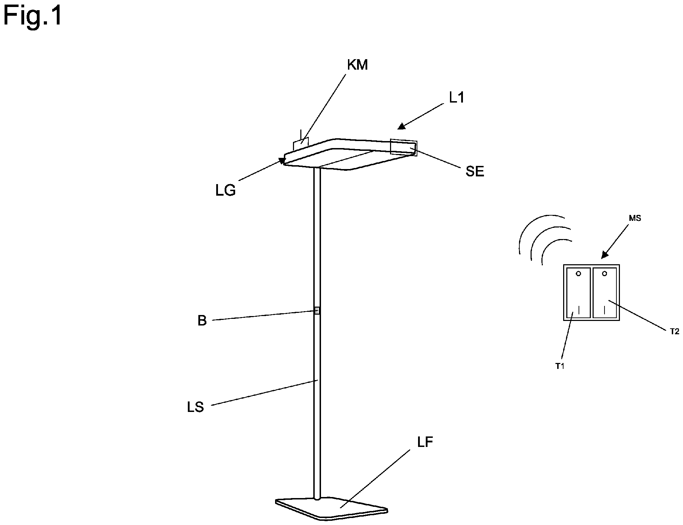

Figur 1 zeigt eine Leuchte L1 die als Stehleuchte ausgebildet ist und einen Leuchtenfuß LF, eine Leuchtenstange LS, und einem am oberen Ende der Leuchtenstange LS befindliches Leuchtengehäuse LG aufweist. In dem Leuchtengehäuse LG sind die Leuchtmittel der Leuchte L1 platziert. Die Leuchtmittel im Leuchtengehäuse LG können über eine herkömmliche manuelle Schalteinrichtung, die beispielsweise an der Leuchtenstange LS befestigt und mit dem Bezugszeichen B bezeichnet ist, von einer Bedienperson eingeschaltet und/oder gedimmt werden. Neben dieser Bedienmöglichkeit ist in Figur 1 noch eine weitere manuelle Schalteinrichtung MS mit zwei Tastern T1 und T2 dargestellt, die nicht unmittelbar mit der Leuchte L1 mechanisch verbunden ist, sondern an anderer Stelle, z. B. an einer Wand eines Raumes befestigt ist und mit der Leuchte L1 drahtlos kommuniziert, um die Leuchte L1 einzuschalten und/oder auch zu dimmen. Diese manuelle Schalteinrichtung MS sendet die Schalt- bzw. Steuerfunktionen drahtlos zur Leuchte L1, welche hierfür ein geeignetes Kommunikationsmodul KM aufweist. Die Kommunikation kann beispielsweise nach dem System erfolgen, wie es in der DE 10 2006 061 705 A1 oder DE 10 2007 037 895 A1 der Firma Enocean GmbH beschrieben ist.

Zusätzlich verfügt die Leuchte L1 von Figur 1 über eine Sensoreinrichtung SE zur Präsenserkennung, ob sich im Sensorbereich der Leuchte L1 eine Person aufhält oder sich diesem Sensorbereich nähert.

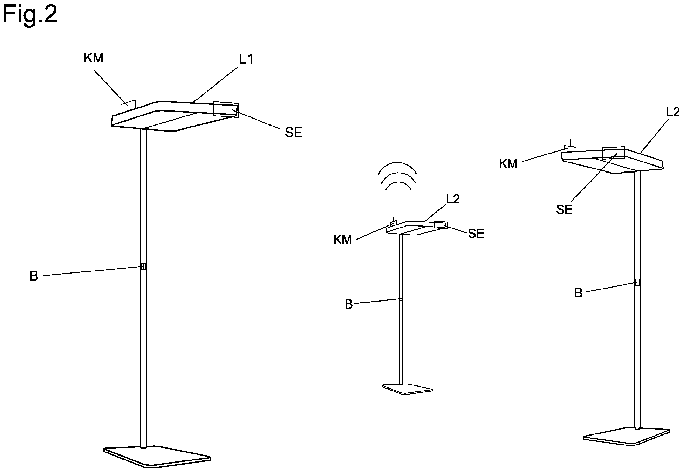

In Figur 2 sind innerhalb eines Raumes drei Stehleuchten L1, L2 und L3 dargestellt. Jede dieser drei Leuchten L1, L2 und L3 ist mit einer Kommunikationseinrichtung KM ausgestattet, die es erlaubt, dass die Leuchten L1, L2 und L3 untereinander drahtlos kommunizieren, so dass nach Maßgabe oder aktuellen Betriebsmodus einer der Leuchten, z. B. der Leuchte L2, die anderen beiden Leuchten L1 und L3 in einen vordefinierten, anderen Betriebsmodus selbsttätig versetzbar sind.

Es wird dabei angenommen, dass die drei Leuchten L1, L2 und L3 mit drei verschiedenen Betriebsmodi betrieben werden können. Ein erster Betriebsmodus besteht darin, dass die jeweilige Leuchte L1, L2 und L3 ausgeschaltet ist und damit den Betriebsmodus "aus" einnimmt. Als zweiter Betriebsmodus ist vorgesehen, dass die jeweilige Leuchte L1, L2 und L3 mit einer maximal vorgegebenen, individuell einstellbaren Beleuchtungsstärke leuchtet. Dieser Betriebsmodus wird als "Arbeitsniveau" bezeichnet, bei dem im Bereich der Leuchte von dieser Leuchte eine gewünschte Lichtmenge ausgestrahlt wird, um ein optimales Arbeiten zu ermöglichen. Ein dritter Betriebsmodus besteht darin, dass die jeweilige Leuchte mit einer Grundbeleuchtung leuchtet, d. h. mit einer Beleuchtung, die geringer ist, als das Arbeitsniveau. Dieser dritte Betriebsmodus wird als "Grundniveau" bezeichnet.

Wird angenommen, dass in Figur 2 eine Bedienperson die Leuchte L2 einschaltet oder sich eine Bedienperson der Leuchte L2 so nähert, dass die Sensoreinrichtung SE diese Person detektiert, schaltet die Leuchte L2 ein, um im Arbeitsniveau zu leuchten. Dieses Leuchten im Arbeitsniveau der Leuchte L2 wird von den beiden übrigen Leuchten L1 und L3 erfasst, entweder indem die Kommunikationseinrichtung KM der Leuchte L2 dies den Kommunikationseinrichtung KM in den Leuchten L1 und L3 übermittelt oder indem die Kommunikationseinrichtung KM in den Leuchten L1 und L3 diesen Zustand der Leuchte L2 an der Kommunikationseinrichtung KM der Leuchte L2 detektiert. Die Information, dass die Leuchte L2 im Arbeitsniveau leuchtet, führt aufgrund der erfolgten Kommunikation dazu, dass sich die beiden Leuchten L1 und L3, die voraussetzungsgemäß in der Nähe der Leuchte L2 stehen und zu einer noch zu erläuternden Gruppe der Leuchte L2 gehören, von ihrem Betriebsmodus "aus" in die Grundbeleuchtung und damit in das Grundniveau selbsttätig einschalten.

Das Einschalten der Leuchte L2 führt deshalb dazu, dass die beiden anderen Leuchten L1 und L3 ebenfalls leuchten, aber mit einer geringeren Leuchtstärke. Die gesamte Beleuchtung des Raumes nimmt durch das Einschalten der Leuchten L1 und L2 auf das Grundniveau erst allmählich in der Raumtiefe ab. Insgesamt wird hierdurch im Umfeld der Leuchte L3 ein angenehmeres Beleuchtungsgefühl erzeugt als dies der Fall wäre, wenn die Leuchte L2 einzeln leuchten würde und damit als einzelne Lichtinsel arbeitet. Mit der beschriebenen Anordnung wird ein angenehmeres Raumgefühl geschaffen, wenn sich die Beleuchtung im Raum nicht abrupt von hell auf dunkel ändert, wie dies der Fall wäre, wenn nur die Leuchte L2 leuchten würde.

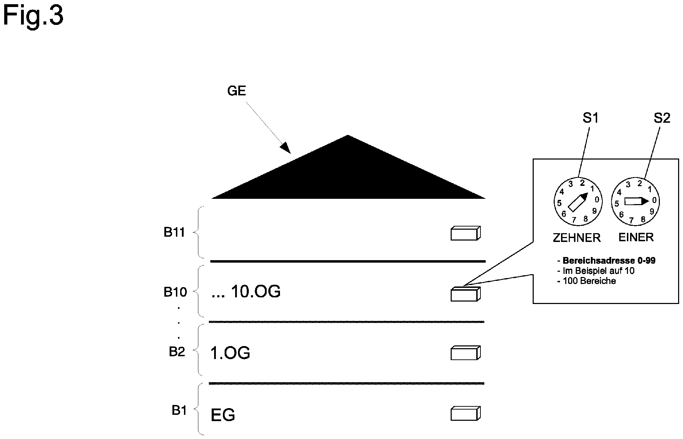

Im Zusammenhang mit Figur 3 wurde davon ausgegangen, dass die drei Leuchten L1, L2 und L3 über ihre Kommunikationsmodule KM miteinander korrespondieren. Bei der Verwendung einer Vielzahl von Leuchten in einem Gebäude ist es jedoch zweckmäßig, diese Leuchten in unterschiedliche Bereiche oder Gruppen zu gruppieren um zu vermeiden, dass sämtliche Leuchten miteinander kommunizieren. Eine sinnvolle Bereichs- und Gruppenzuordnung besteht beispielsweise darin, die jeweiligen Leuchten stockwerksbezogen bzw. raumbezogen innerhalb eines Gebäudes zu gruppieren.

In Figur 3 ist ein solches mehrstöckiges Gebäude GE mit 11 Stockwerken B1...B11 dargestellt. In jeden der Stockwerke B1...B11 sind eine Vielzahl von Stehleuchten platziert, wovon in Figur 3 schematisch in jedem Stockwerk stellvertretend für eine Leuchte lediglich ein Kommunikationsmodul KM diesen Leuchten dargestellt ist. In den Kommunikationsmodulen KM sind jeweils manuelle Schalter S1, S2, die hier als Drehschalter ausgebildet sind, platziert, um eine Bereichsadresse festzulegen. Diese beiden Schalter S1, S2 sind in Figur 3 schematisch für eines der Kommunikationsmodule KM im zehnten Stock B10 des Gebäudes GE näher dargestellt.

Die beiden Schalter S1, S2 haben jeweils zehn verschiedene Stellungen 0 bis 9 und können so gemeinsam 100 verschiedene Bereichsadressen festlegen. Mit diesen Bereichsadressen werden die Stehleuchten in Bereiche innerhalb des Gebäudes GE eingeteilt. So sind beispielsweise die Kommunikationsmodule KM im zehnten Stockwerk B10 auf die Bereichsadresse "10" eingestellt, indem der Schalter S1 auf "1" und der Schalter S2 auf "0" geschaltet ist. Im Erdgeschoss B1 würde der Schalter S1 auf "0" und der Schalter S2 auf "0" stehen. Das erste Obergeschoss des Gebäudes GE würde einen zweiten Bereich B2 definieren, bei dem der Schalter S1 auf "0" und der Schalter S2 auf "1" steht usw. Mit den Schaltern S1 und S2 werden deshalb in dem Kommunikationsmodulen KM und damit den verschiedenen Leuchten Bereiche B1...B11 zugeordnet, die in den verschiedenen Stockwerken des Gebäudes GE zugeordnet sind.

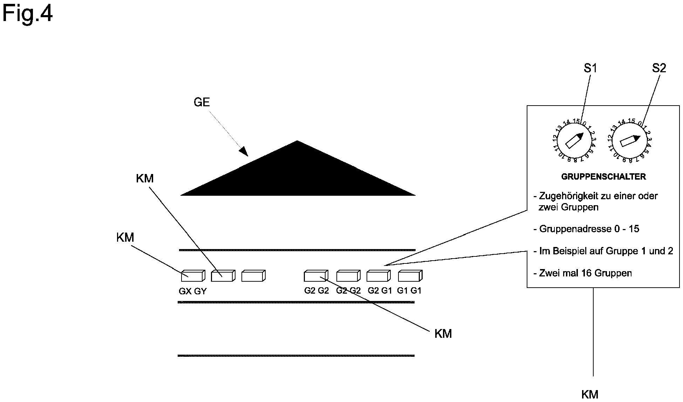

Eine weitere Zuordnung wird im Zusammenhang mit Figur 4 deutlich. Diese Zuordnung betrifft verschiedene Gruppen innerhalb eines Stockwerks des Gebäudes GE, wobei diese Gruppen so gewählt werden können, dass sie verschiedenen Räumen in Stockwerk zugeordnet sind oder verschiedenen Bereichen innerhalb eines Raumes, insbesondere innerhalb eines Großraumbüros. Für diese Zuordnung sind in den Kommunikationsmodulen KM der Leuchten weitere Schalter S3, S4 integriert, durch welche Gruppenadressen festlegbar sind. Im Ausführungsbeispiel von Figur 4 sind zwei manuell zu betätigende Schalter S3, S4 vorgesehen, mit denen es möglich ist, eine Leuchte zwei Gruppen zuzuordnen. Die beiden Schalter S3, S4 sind wiederum vorzugsweise als Drehschalter ausgebildet und mit 16 verschiedenen Schalterstellungen ausgestattet. Damit ist es möglich, jede Leuchte über die entsprechenden Einstellungen der Schalter S3, S4 innerhalb des Kommunikationsmoduls KM zwei verschiedenen Gruppen aus insgesamt 16 Gruppen zuzuordnen. Der Schalter S3 ist in der vergrößerten Darstellung des Kommunikationsmoduls KM von Figur 4 in Stellung "1" geschaltet. Damit gehört die zugehörende Leuchte der Gruppe 1 an. Der Schalter S4 steht auf Stellung "2", so dass diese Leuchte nicht nur der Gruppe "1", sondern auch der Gruppe "2" zugeordnet ist und deshalb sowohl mit der Gruppe "1" als auch mit der Gruppe "2" drahtlos kommunizieren kann.

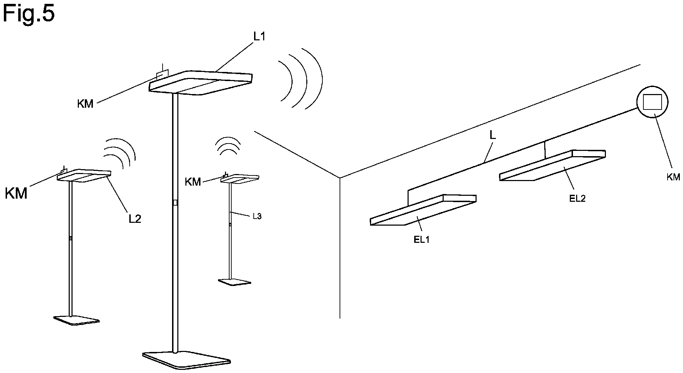

In Figur 5 ist die Beleuchtungseinrichtung von Figur 2 mit den drei Stehleuchten L1, L2 und L3 um zwei Wand- bzw. Hängeleuchten EL1, EL2 erweitert. Diese beiden Hängeleuchten EL1, EL2 sind über eine elektrische Leitung L mit einem weiteren Kommunikationsmodul KM in Verbindung, das ähnlich zu den Kommunikationsmodulen KM der Leuchte L1, L2 und L3 ist. Im Ausführungsbeispiel verfügen diese Hängeleuchten EL1, EL2 über keine eigene Schaltvorrichtung, so dass diese auf die Beleuchtungssituationen der Leuchten L1, L2 und L3 nur passiv reagieren können. Wird, wie im Ausführungsbeispiel von Figur 2 angenommen, die Leuchte L2 durch manuelles Einschalten oder Präsenzerkennung ins Arbeitsniveau geschaltet und sind die beiden übrigen Stehleuchten L1 und L3 sowie die Kommunikationseinrichtung KM oder beiden Wand- bzw. Hängeleuchten EL1 und EL2 der Gruppe der sich angeblich im Arbeitsniveau befindlichen Leuchte L2 zugeordnet, so leuchten die Wand- bzw. Hängeleuchten EL1 und EL2 ebenfalls im Grundniveau. Das Gleiche gilt für die Stehleuchten L1 und L3, sofern diese nicht selbst im Arbeitsniveau leuchten.

Es ist jedoch auch möglich, dass die zwei Leuchten EL1, EL2 in Figur 5 nicht mit einer Kommunikationseinrichtung KM verbunden sind, sondern mit einem normalen externen Schaltaktor verbunden sind. Über einen Taster an dem Kommunikationsmodul in der Leuchte kann diese Funktion aktiviert bzw. deaktiviert werden. Bei aktivierter Funktion fungiert die Leuchte wie eine externe Schaltvorrichtung. D. h., sobald die Leuchte von "Aus" auf "An" (Grundniveau, Arbeitsniveau, Putzniveau) geht, wird die Schalterinformation "Ein" gesendet. Beim Wechsel auf den Betriebsmodus "Aus" wird die Schalterinformation "Aus" gesendet.

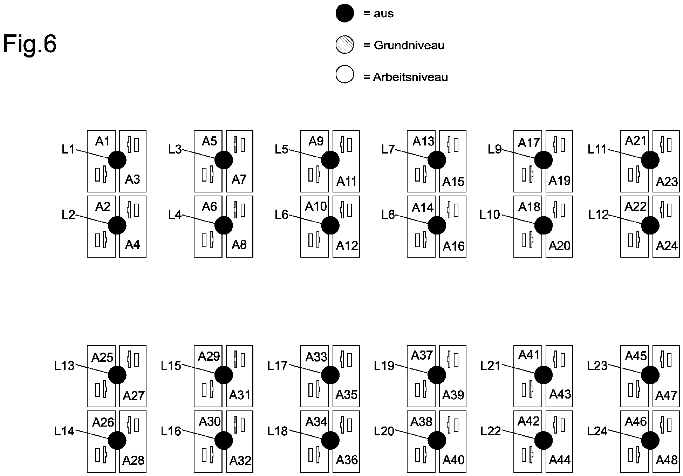

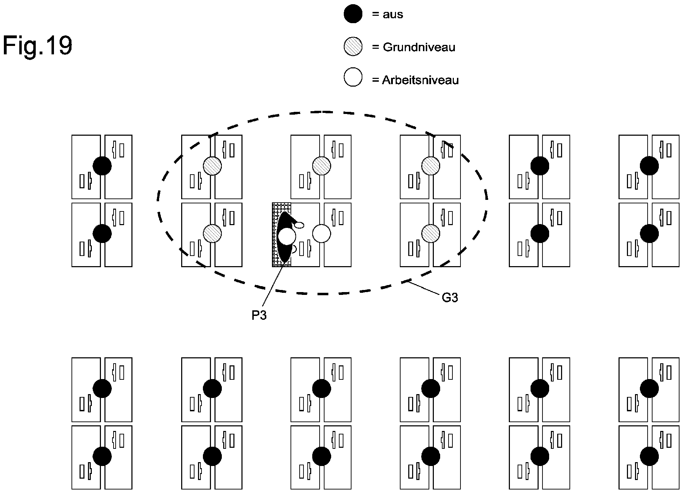

In den nachfolgenden Figuren 6 bis 24 wird eine typische Beleuchtungssituation eines Großraumbüros mit einer Vielzahl von Arbeitsplätzen und Arbeitsleuchten illustriert, wenn verschiedene Personen in dieses Großraumbüro eintreten bzw. verlassen. Dabei wird in anschaulicher Art und Weise erläutert, wie bisher übliche Lichtinseln wirksam vermieden werden.

In Figur 6 ist beispielhaft ein Großraumbüro bzw. eine Arbeitshalle dargestellt mit insgesamt 48 Arbeitsplätzen A1 bis A48, wobei jeweils vier Arbeitsplätze A1, A2, A3, A4 usw. paarweise gegenüber und nebeneinander stehen. Zwischen den Stirnseiten von zwei sich gegenüberliegenden Arbeitsplätzen A1, A3; A2, A4 ist jeweils eine Leuchte L1, L2 usw. platziert. In dem dargestellten Raum sind demnach insgesamt 24 Leuchten L1 bis L24 platziert. Sämtliche dieser Leuchten L1 bis L24 sind dem gleichen Bereich zugeordnet und damit mit der gleichen Bereichsadresse innerhalb des jeweiligen Kommunikationsmoduls versehen. Die zuvor erwähnten Schalter S1, S2 stehen bei dieser Leuchte L1 bis L24 auf der gleichen Position. Darüber hinaus sind die einzelnen Leuchten L1 bis L24 gruppenweise einander zugeordnet. Hierfür sind in den Kommunikationsmodulen die entsprechenden Schalter S3, S4 (vgl. hierzu Figur 4) auf die entsprechenden Gruppenadressen programmiert. Die Gruppen sind dabei so festgelegt, dass, ausgehend von einer eine Gruppe bestimmenden Leuchte, die jeweils um diese Leuchte unmittelbar herum gruppierten anderen Leuchten zur gleichen Gruppe gehören. Hierdurch können sich auch Gruppen überschneiden.

Betrachtet man beispielsweise in Figur 6 die Leuchte L3 und legt man eine Gruppe zu dieser Leuchte L3 als erste Gruppe G1 fest, so gehören zu dieser durch die Leuchte L3 festgelegten ersten Gruppe G1 auch die Leuchten L1, L2, L4, L5 und L6. Eine zweite Gruppe kann beispielsweise die Leuchte L5 festlegen. Zu dieser Gruppe G5 gehören neben der Leuchte L5 die unmittelbar um die Leuchte L5 herum befindlichen Leuchten L3, L4, L6, L7 und L8 usw.

Im Ausführungsbeispiel von Figur 6 befinden sich in dem Raum keinerlei Personen. Sämtliche Leuchten L1 bis L24 befinden sich im Betriebsmodus "aus". Die Leuchten können jedoch auf ihr Arbeitsniveau einschalten und daher mit einer maximal vorgegebenen Leuchtstärke leuchten. Darüber hinaus sind die Leuchten L1 bis L24 dazu geeignet, auch in einem Grundniveau mit geringerer Leuchtstärke zu leuchten.

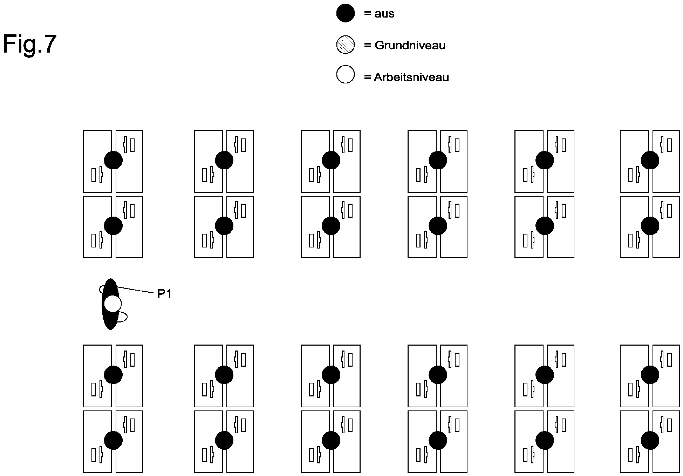

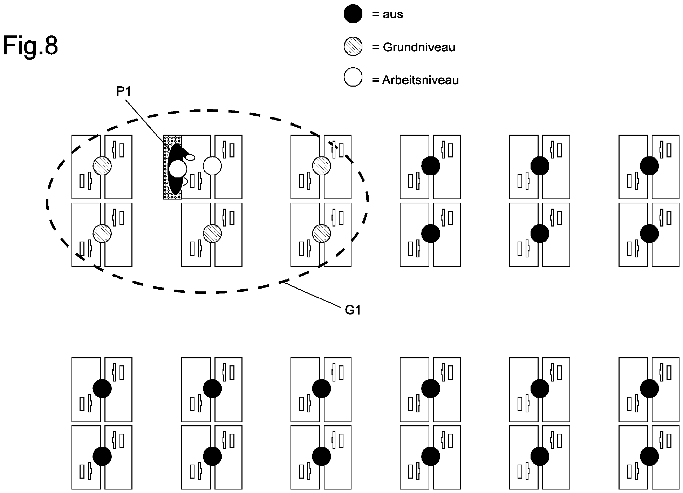

In Figur 7 betritt eine erste Person P1 den Gangbereich des Großraumbüros um, wie in Figur 8 gezeigt, den Arbeitsplatz A5 einzunehmen. Die Leuchte L3 detektiert die Person P1 und schaltet auf ihr Arbeitsniveau, so dass die Person P1 eine optimale Beleuchtung des Arbeitsplatzes genießt. Dieses Einschalten auf Arbeitsniveau wird von den zur gleichen Gruppe G1 gehörenden umgebenden Leuchten L1, L2, L4, L5 und L6 erfasst, so dass diese auf ihr Grundniveau einschalten.

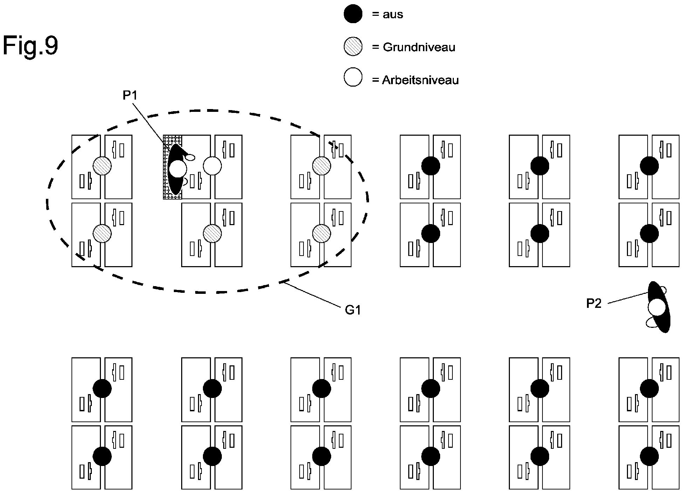

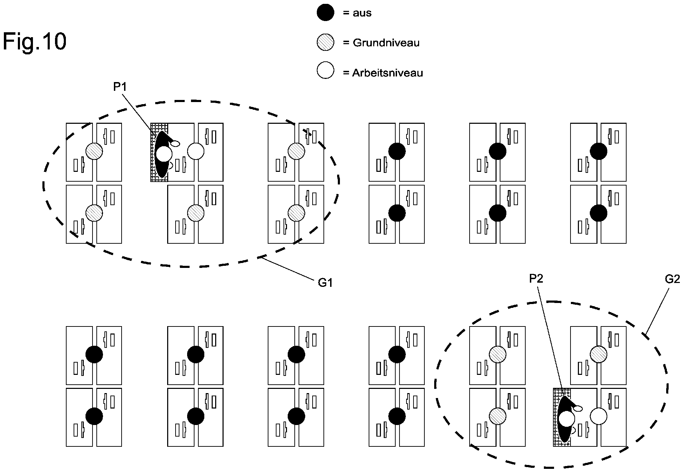

Gemäß Figur 9 nähert sich von rechts eine zweite Person P2 ihren Arbeitsplatz. Die Person P2 betritt den Arbeitsplatz A46 (vergleiche Figur 10), wodurch die Leuchte L24 in Arbeitsniveau einschaltet. Dieses Einschalten auf Arbeitsniveau wird von den unmittelbar in Nachbarschaft liegenden Leuchten L21, L22 und L23 erkannt bzw. diesen mitgeteilt, wodurch diese in der Gruppe G2 befindlichen Leuchten L21, L22 und L23 auf ihr Grundniveau einschalten.

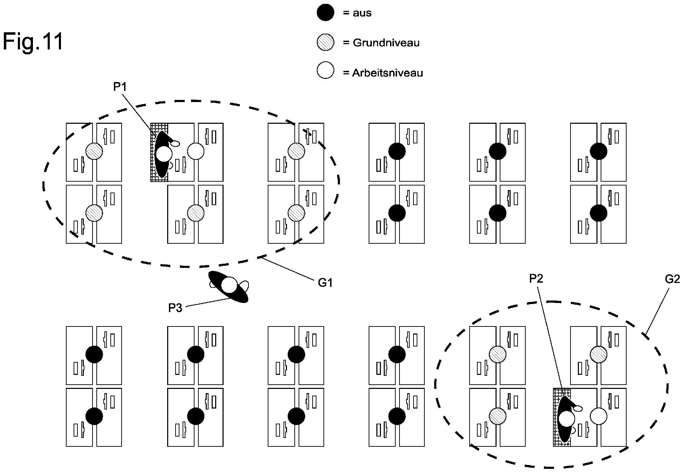

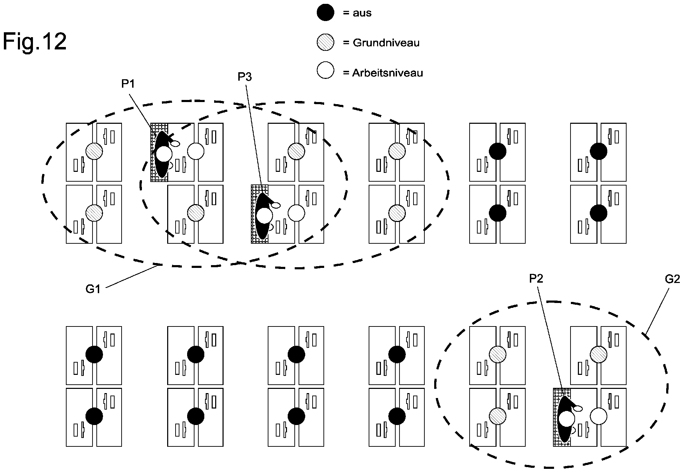

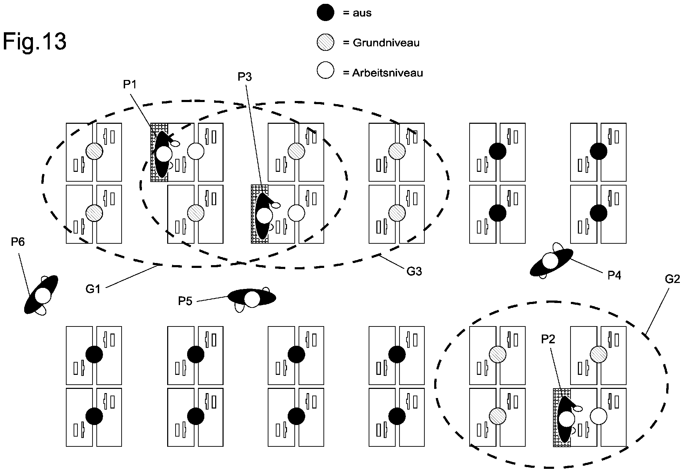

In Figur 11 tritt eine weitere Person P3 hinzu und setzt sich gemäß Figur 12 auf den Arbeitsplatz A10. Die zum Arbeitsplatz A10 gehörende Leuchte L6 schaltet von ihrem Grundniveau auf Arbeitsniveau, was gemäß Figur 13 dazu führt, dass die in unmittelbarer Nachbarschaft zur Leuchte L6 befindlichen anderen Leuchten darüber informiert werden, dass sich die Leuchte L6 in Arbeitsniveau befindet. Die Leuchten L4, L5 befinden sich bereits im Grundniveau und ändern im Betriebsmodus nicht. Allerdings schalten die Leuchten L7 und L8 auf Grundniveau, da diese zu der Gruppe G3 gehören, die durch die Leuchte L6 vorgegeben ist.

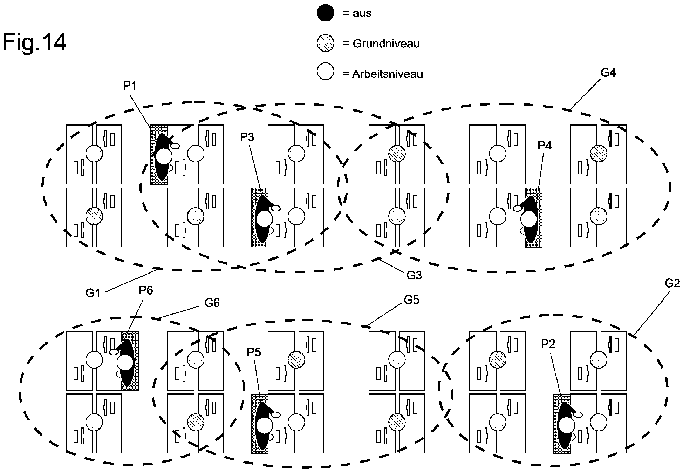

In Figur 13 treten weitere drei Personen P4, P5 und P6 in das Großraumbüro und nehmen gemäß Figur 14 die Arbeitsplätze A20, A27 und A34 ein. Als Folge hiervon schalten die Leuchten L10, L13 und L18 in ihr Arbeitsniveau. Die zur Gruppe G4 gehörenden und noch nicht in Grundniveau befindlichen Leuchten L9, L11, L12 schalten auf Grundniveau, ebenfalls die zur Gruppe G5 und Gruppe G6 gehörenden Leuchten L14, L15, L16, L17, L19 und L20.

Gemäß Figur 14 leuchten sämtliche Leuchte L1 bis L24 in dem Großraumbüro, allerdings auf unterschiedlichem Niveau. Die Leuchten L3, L6, L10, L13, L18 und L24 leuchten auf Arbeitsniveau. Die übrigen Leuchten L1, L2, L3 - L5, L7-L9, L11-L12, L14-L17, L19-L23 befinden sich im Grundniveau.

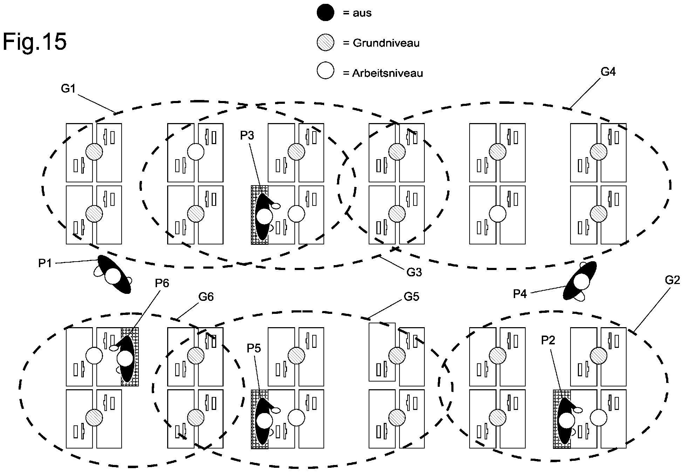

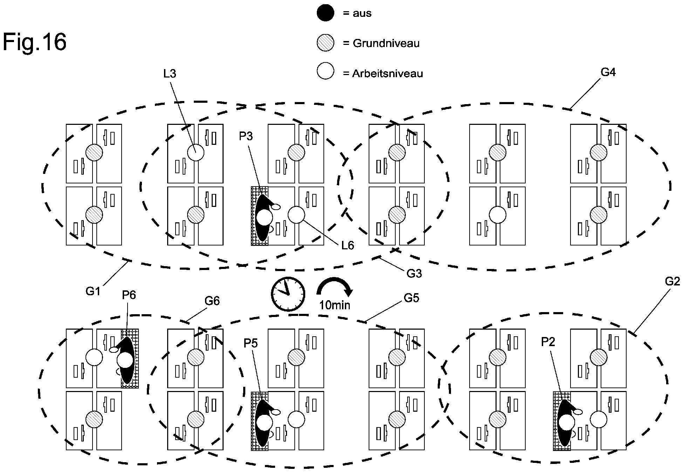

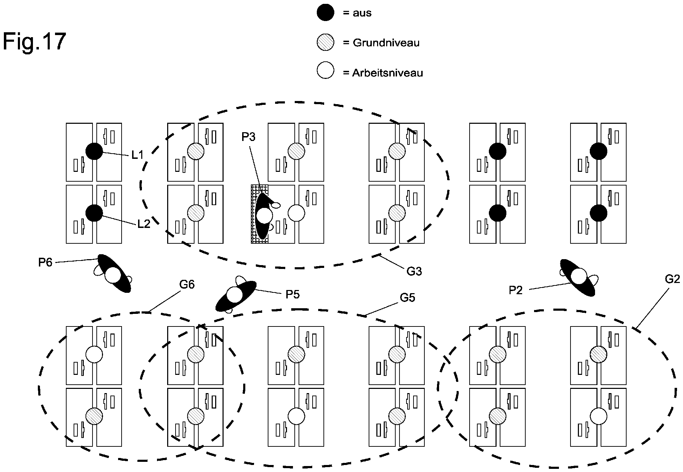

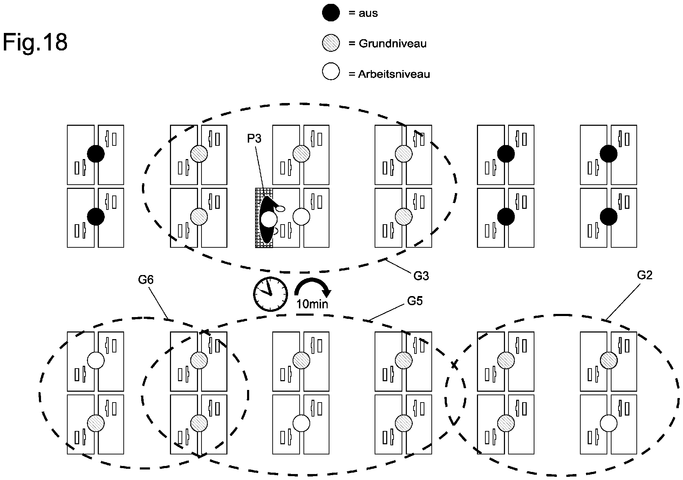

In der in Figur 15 dargestellten Situation verlassen die Personen P1 und P4 ihren jeweiligen Arbeitsplatz A5 bzw. A22. Die Beleuchtung bleibt für eine vorgegeben Nachlaufzeit, von z.B. 10 Minuten, wie in Figur 16 gezeigt, unverändert zu der Beleuchtungssituation von Figur 14 und 15. Nach dieser Nachlaufzeit würde die Leuchte L3 aufgrund des Verlassens der betreffenden Person P1 am Arbeitsplatz A5 in den Betriebszustand "aus" gehen. Allerdings befindet sich die Leuchte L3 in unmittelbarer Nähe zur Leuchte L6 an der noch die Person P3 sitzt. Deshalb schaltet die Leuchte L3 nicht komplett aus, sondern geht in ihr Grundniveau. Allerdings schalten die zur Gruppe G1 gehörenden Leuchten L1 und L2 aus. Wie zusätzlich aus Figur 17 ersichtlich, verlassen die Personen P2, P5 und P6 ihren jeweiligen Arbeitsplatz A34, A37 bzw. A46. Der Leuchtzustand der Leuchten L13 bis L24 ändert sich für die genannte Nachlaufzeit nicht (vgl. hierzu Figur 18). Allerdings gehen nach Ablauf dieser Nachlaufzeit alle Leuchten L13 bis L24 in ihren Auszustand.

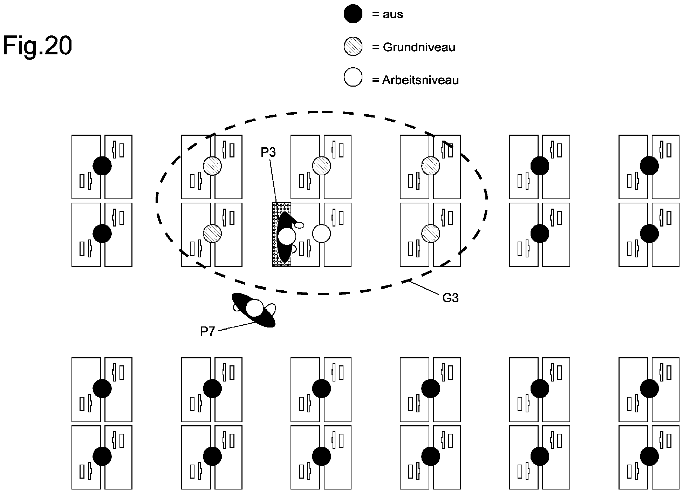

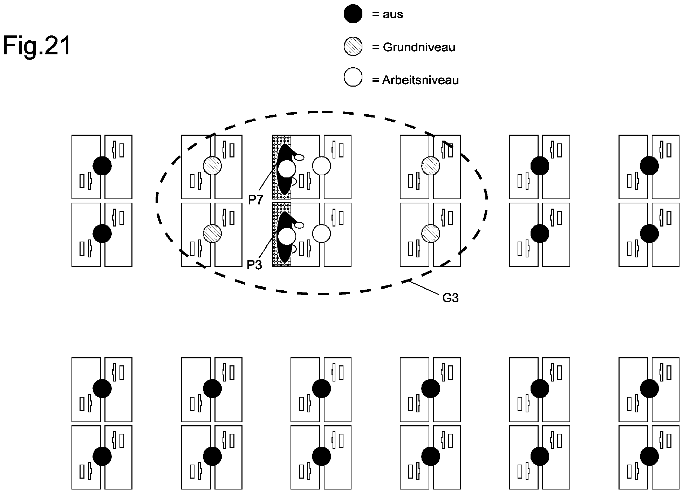

In Figur 20 betritt eine neue Person P7 den Raum und setzt sich gemäß Figur 21 an den Arbeitsplatz A9 und damit neben die Person P3. Durch Präsenzerkennung mittels einer Sensoreinrichtung an der Leuchte L5 schaltet diese in ihr Arbeitsniveau. Diese Leuchte L5 war zuvor im Grundniveau, weil sie unmittelbar neben der Leuchte L6, die sich im Arbeitsniveau befindet, steht.

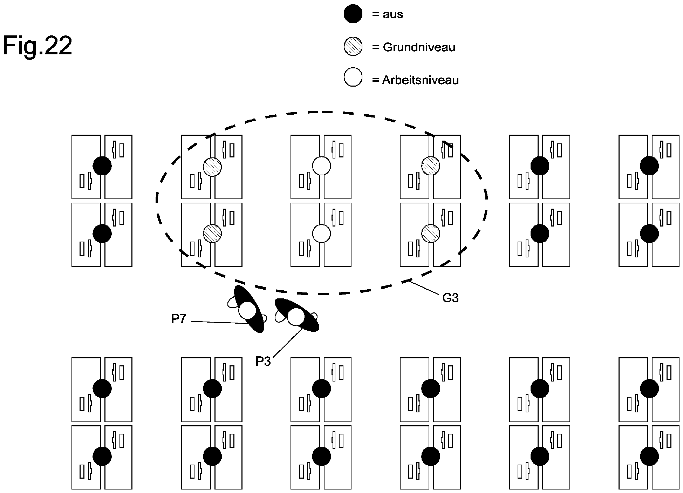

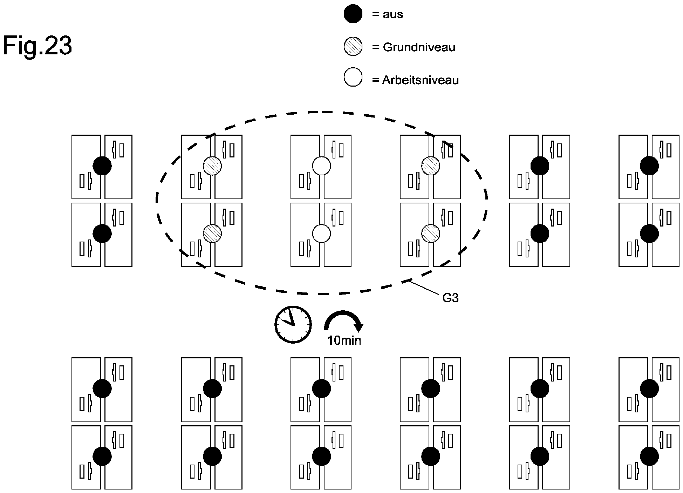

Anschließend verlassen gemäß Figur 22 die beiden Personen P3 und P7 ihren jeweiligen Arbeitsplatz A9, A10. Die Beleuchtungssituation in der Gruppe G3 bleibt zunächst unverändert, d.h. die Leuchten L5 und L6 bleiben bis zum Ablauf der Nachlaufzeit (vgl. Figur 23) in ihrem Arbeitsniveau und die unmittelbar benachbart hierzu befindlichen Leuchten L3, L4, L7 und L8 in ihrem Grundniveau.

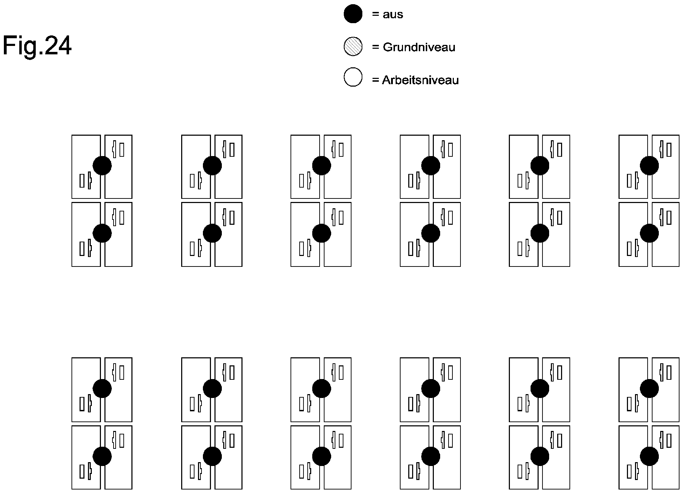

Anschließend schalten alle Leuchten L3 bis L8 der Gruppe G3 aus, wie in Figur 24 dargestellt. Das Großraumbüro ist dunkel.

Mittels einer in den Figuren 6 - 24 nicht dargestellten Schalteinrichtung könnten alle Leuchten L1 - L24 gleichzeitig eingeschaltet werden, um z. B. einer Putzkolonne zu ermöglichen, bei kompletter Ausleuchtung das Großraumbüro zu reinigen.

### Bezugszeichenliste

- aus: Betriebsmodus "aus"
- AN: Betriebsmodus "Arbeitsniveau"
- GN: Betriebsmodus "Grundniveau"

- A1...A48: Arbeitsplätze 1-48
- B1...B11: Bereiche 1-11
- B: Bedieneinrichtung
- EL1, EL2: Einbauleuchten
- GE: Gebäude
- G1...G6: Gruppen 1-6
- KM: Kommunikationsmodul
- L1...L24: Leuchten 1-24
- L1...L24: Leuchten 1-24
- LF: Leuchtenfuß
- LG: Leuchtengehäuse
- L: Leitung
- LS: Leuchtenstange
- MS: manuell zu betätigende Schalteinrichtung
- P1...P7: Personen 1-7
- SE: Sensoreinrichtung
- S1...S4: Schalter 1-4
- T1, T2: Taster

## Patentansprüche

1. Intelligente Beleuchtungseinrichtung mit mehreren Leuchten (L1...L24), die mit einer Kommunikationseinrichtung zumindest teilweise untereinander gekoppelt sind,
**dadurch gekennzeichnet, dass**
eine drahtlose Kommunikationseinrichtung vorgesehen ist, über welche die Leuchten (L1...L24) zumindest teilweise untereinander kommunizieren, wobei nach Maßgabe des aktuellen Betriebsmodus einer der Leuchten (L3) mindestens eine der anderen Leuchten (L1, L2, L4, L5, L6) einen vordefinierten anderen Betriebsmodus einnimmt.

2. Intelligente Beleuchtungseinrichtung nach Anspruch 1,
**dadurch gekennzeichnet, dass** jede der Leuchten (L1...L24) folgende Betriebsmodi aufweist:
- Leuchte ist aus (aus),
- Leuchte ist mit einer Grundbeleuchtung an (Grundniveau),
- Leuchte ist mit maximal vorgegebener Beleuchtungsstärke an (Arbeitsniveau), und vorzugsweise auch:
- Leuchte ist mit maximal möglicher Beleuchtungsstärke an (Putzniveau).

3. Intelligente Beleuchtungseinrichtung nach Anspruch 2,
**dadurch gekennzeichnet, dass**
das Grundniveau und/oder das Arbeitsniveau einstellbar ist.

4. Intelligente Beleuchtungseinrichtung nach einem der Ansprüche 1 bis 3,
**dadurch gekennzeichnet, dass**
jeder der Leuchten (L1...L24) ein vorgegebener Bereich (B1...B11) mit einer Bereichsadresse zugeordnet ist.

5. Intelligente Beleuchtungseinrichtung nach Anspruch 4,
**dadurch gekennzeichnet, dass**
der vorgegebene Bereich (B1...B11) mit der Bereichsadresse einem unterschiedlichen Stockwerk und/oder einem unterschiedlichen Raum innerhalb eines Gebäudes zugeordnet ist.

6. Intelligente Beleuchtungseinrichtung nach einem der Ansprüche 1 bis 5,
**dadurch gekennzeichnet, dass**
jede der Leuchten (L1...L24) einer, vorzugsweise zwei oder mehr Gruppen (G1...G6) zugeordnet ist, wobei jede Gruppe (G1...G6) eine eigene Gruppenadresse aufweist.

7. Intelligente Beleuchtungseinrichtung nach Anspruch 6,
**dadurch gekennzeichnet, dass**
sich die einer Leuchte (L1...L24) zugeordneten Gruppen (G1...G6) überschneiden.

8. Intelligente Beleuchtungseinrichtung nach einem der Ansprüche 4 bis 7,
**dadurch gekennzeichnet, dass**
die Bereichsadresse und/oder mindestens Gruppenadresse über mechanische Schalteinrichtungen (S1...S4) manuell an einer Leuchte (L1...L24) eingebbar ist.

9. Intelligente Beleuchtungseinrichtung nach einem der Ansprüche 6 bis 8,
**dadurch gekennzeichnet, dass**
zu einer Gruppe (G1...G6) von Leuchten diejenigen Leuchten (L1...L24) gehören, die unmittelbar zueinander benachbart angeordnet sind.

10. Intelligente Beleuchtungseinrichtung nach einem der Ansprüche 1 bis 9,
**dadurch gekennzeichnet, dass**
die Leuchten zumindest teilweise über eine Sensorvorrichtung verfügen, wobei sich bei Detektion einer Person im Sensorbereich die jeweilige Leuchte (Präsenzerkennung) einschaltet.

11. Intelligente Beleuchtungseinrichtung nach Anspruch 10,
**dadurch gekennzeichnet , dass** beim
manuellen Einschalten einer Leuchte (L11...L24) oder bei Präsenzerkennung an einer Leuchte (L1...L24) diese auf ihr Arbeitsniveau einschaltbar ist und die zur gleichen Gruppe (G1...G6) und zum gleichen Bereich (B1...B11) gehörenden anderen Leuchten (L1...L24) entweder von der eingeschalteten Leuchte (L1...L24) drahtlos mitgeteilt bekommen oder selbsttätig detektieren, in das Grundniveau zu gehen, sofern die andere Leuchte (L1...L24) oder anderen Leuchten (L1...L24) nicht selbst bereits auf Arbeitsniveau geschaltet sind.

12. Intelligente Beleuchtungseinrichtung nach Anspruch 11,
**dadurch gekennzeichnet, dass**
der Zustand einer Leuchte (L1...L24), sich im Arbeitszustand zu befinden, intervallmäßig den anderen Leuchten (L1...L24)mitteilbar ist, vorzugsweise in 10- bis 20-Sekunden-Intervallen.

13. Intelligente Beleuchtungseinrichtung nach einem der Ansprüche 1 bis 12,
**dadurch gekennzeichnet, dass**
das Abschalten einer Leuchte (L1...L24) von den zum gleichen Bereich (B1...B11) und zur gleichen Gruppe (G1...G6) gehörenden anderen Leuchten (L1...L24) detektierbar ist.

14. Intelligente Beleuchtungseinrichtung nach einem der Ansprüche 1 bis 13,
**dadurch gekennzeichnet, dass**
eine Nachlaufzeit von mehreren Minuten vorgesehen ist, insbesondere 5 bis 30 Minuten, vorzugsweise etwa 10 Minuten, und das Fehlen einer Präsenzerkennung erst nach Ablauf dieser Nachlaufzeit den anderen Leuchten in der gleichen Gruppe (G1...G6) und in dem gleichen Bereich (B1...B11) mitteilbar ist.

15. Intelligente Beleuchtungseinrichtung nach einem der Ansprüche 1 bis 14,
**dadurch gekennzeichnet, dass**
eine manuell zu betätigende Schalteinrichtung (MS) vorgesehen ist, über welche drahtlos alle Leuchten (L1...L24) oder alle Leuchten (L1...L24) eines Bereichs (B1...B11) oder alle Leuchten (L1...L24) einer oder mehrerer Gruppen (G1...G6) ausschaltbar oder in die maximale Beleuchtungsstärke (Arbeitsniveau) einschaltbar sind.

16. Intelligente Beleuchtungseinrichtung nach einem der Ansprüche 1 bis 15,
**dadurch gekennzeichnet, dass**
eine manuell zu betätigende Schalteinrichtung (MS) vorgesehen ist, über welche mindestens eine Leuchte (L1...L24) einschaltbar und/oder auf ihr Arbeitsniveau (AN) dimmbar ist.

17. Intelligente Beleuchtungseinrichtung nach einem der Ansprüche 1 bis 16,
**dadurch gekennzeichnet, dass**
die drahtlose Kommunikationseinrichtung einzelne Kommunikationsmodule (KM) aufweist, welche vorzugsweise auswechselbar an oder in den Leuchten (L1...L24) angeordnet sind.

18. Intelligente Beleuchtungseinrichtung nach Anspruch 17,
**dadurch gekennzeichnet, dass**
in den Kommunikationsmodulen (KM) die manuell zu betätigenden Schalteinrichtungen (S1...S4) zum Festlegen der Bereichsadresse und/oder Gruppenadresse angeordnet sind.

19. Intelligente Beleuchtungseinrichtung nach einem der Ansprüche 1 bis 16,
**dadurch gekennzeichnet, dass**
die Leuchten (L1...L24) Stehleuchten oder Tischaufbauleuchten sind.

20. Verfahren zum Betreiben einer Beleuchtungseinrichtung mit mehreren Leuchten (L1...L24), die mit einer Kommunikationseinrichtung zumindest teilweise untereinander gekoppelt sind,
**dadurch gekennzeichnet, dass**
die Leuchten (L1...L24) zumindest teilweise untereinander drahtlos kommunizieren und nach Maßgabe des aktuellen Betriebsmodus einer der Leuchten (L3) mindestens eine der anderen Leuchten (L1, L2, L4, L5, L6) einen vordefinierten anderen Betriebsmodus einnimmt.
